# EUROPÄISCHE PATENTSCHRIFT

(11) **EP 3 253 553 B1**
(45) Veröffentlichungstag und Bekanntmachung des Hinweises auf die Patenterteilung: **30.09.2020**
(21) Anmeldenummer: 15794897.7
(22) Anmeldetag: 12.11.2015
(51) Int. Cl.: B29D 30/52, B29C 48/30, B29C 48/305, B29C 48/70, B29K 21/00, B29C 48/16, B29C 48/49, B29C 48/07, B29K 105/00, B29L 30/00

(54) **VORRICHTUNG ZUR HERSTELLUNG EINES MEHRSCHICHTIG ZUSAMMENGESETZTEN ROHLAUFSTREIFENS**
DEVICE FOR PRODUCING A MULTILAYERED COMPOSITE UNCURED TREAD STRIP
DISPOSITIF DE PRODUCTION D'UNE BANDE DE RECHAPAGE MULTICOUCHES

(30) Priorität: 06.02.2015 DE 102015202171
(43) Veröffentlichungstag der Anmeldung: 13.12.2017
(73) Patentinhaber: Continental Reifen Deutschland GmbH, 30165 Hannover (DE)
(72) Erfinder: SCHRAMM, Oliver, 31177 Harsum (DE)
(74) Vertreter: Widjaja, Wira
(86) Internationale Anmeldenummer: PCT/EP2015/076414
(87) Internationale Veröffentlichungsnummer: WO 2016/124268

(56) Entgegenhaltungen:
- EP-A1- 1 103 391
- WO-A1-02/092322
- DE-A1-102006 036 508

## Beschreibung

Die Erfindung betrifft eine Vorrichtung zur Herstellung eines ein- oder mehrschichtig aus zumindest einer Kautschukmischung aufgebauten Rohlaufstreifens eines Fahrzeugluftreifens mit zumindest einem Extruder, einem Mundstück und einer diesem vorgeordneten Vorschablone, in welcher der zumindest eine Kautschukmischungsstrom vorgeformt wird,
wobei in der Vorschablone vor dem Mundstück lokal zumindest eine Einrichtung positioniert ist, welche den bzw. die in der Vorschablone bereits vorgeformten Kautschukmischungsstrom bzw. -ströme in Querrichtung auseinander führt oder teilt und welche über eine Vorrichtung verfügt, mittels welcher vor dem Vereinigen der Kautschukmischung(en) auf die Trennflächen eine zumindest ein elektrisch leitendes Material enthaltende Dispersion aufbringbar ist.

Es ist bekannt und üblich, ein- oder mehrschichtig aufgebaute Rohlaufstreifen für Fahrzeugluftreifen in einer Vorrichtung der eingangs genannten Art herzustellen. Bei einem mehrschichtig aufgebauten Laufstreifen werden die von mehreren Extrudern geförderten Teilströme aus verschiedenen Kautschukmischungen in einem gemeinsamen Mundstück zum einheitlichen Rohlaufstreifen geformt. In der Praxis sind meist mehrere jeweils separat angetriebene Extruder in sogenannten "Duplex-", "Triplex-" oder "Quadruplexsystemen" in Verwendung.

Darüber hinaus ist es üblich, insbesondere, um den Rollwiderstand von Fahrzeugluftreifen zu reduzieren, bei einem in radialer Richtung beispielsweise zweischichtig aufgebauten Laufstreifen in der beim Abrollen des Reifens mit dem Untergrund in Kontakt kommenden äußeren Laufstreifenschicht, der Laufstreifencap, als Füllstoff Silika (Kieselsäure) zu verwenden, wobei Silika den sonst üblichen Ruß zumindest zum Teil ersetzt. Auch die zweite Laufstreifenschicht, die Laufstreifenbase, kann aus einer mit Silika gefüllten Laufstreifenmischung hergestellt werden. Es ist daher in solchen Laufstreifen zumindest die Laufstreifencap elektrisch nicht oder kaum mehr leitfähig. Werden solche Reifen an einem Fahrzeug montiert, verursachen elektrostatische Aufladungen unangenehme Entladungsvorgänge. Um dies zu verhindern, werden in Laufstreifen elektrisch leitfähige Passagen eingebaut, die elektrisch leitende Verbindungen zwischen der Außenfläche des Laufstreifens und dem elektrisch leitfähigen Unterbau im Reifen, beispielsweise der Gummimischung in einer Gürtelbandage oder in der radial äußeresten Gürtellage, herzustellen. Da die üblichen elektrisch leitfähigen Passagen Ruß enthalten werden sie als "Carbon Center Beams" bezeichnet, welche schmale, etwa mittig im Laufstreifen in Umfangsrichtung umlaufende und sich in radialer Richtung durch den Laufstreifen bis zum Unterbau erstreckende Gummistreifen sind. Die Kautschukmischung für den Carbon Center Beam wird in der Extrusionsvorrichtung in einem Extruder hergestellt und in der Vorschablone mit den extrudierten Teilströmen aus der/den Kautschukmischung(en) für die Laufstreifencap bzw. den Laufstreifen, gegebenenfalls auch mit jenen für die Laufstreifenbase, zusammengeführt. Wird die Laufstreifenbase aus einer elektrisch leitfähigen Kautschukmischung hergestellt, so ist es möglich, in der Extrusionsvorrichtung aus dem Material der Laufstreifenbase einen Streifen mitzuformen, an welchen beidseitig Kautschukmischungsteile für die Laufstreifencap angefügt werden. In diesem Fall ist kein gesonderter Extruder für die Herstellung des Carbon Center Beams erforderlich.

Eine Vorrichtung der eingangs genannten Art ist beispielsweise aus der WO 02/092322 A1 bekannt. Die Vorrichtung weist einen Hauptextruder zur Coextrusion zweier Kautschukmischungsströme auf, welche in unterschiedlichen, durch eine Wand voneinander getrennten Kanälen zu einer Düse geleitet werden, welche die Kautschukmischungsströme in Querrichtung teilt. Ein Mikroextruder führt der Düse eine elektrisch leitfähige Kautschukmischung zu, welche über Öffnungen der Düse vor dem Vereinigen der Kautschukmischungen auf die Trennflächen der geteilten Kautschukmischungsströme zur Bildung eines Carbon Center Beams aufgebracht wird.

Aus der EP 1 103 391 A1 ist ebenfalls eine Vorrichtung bekannt, welche einen Hauptextruder zur Coextrusion zweier Kautschukmischungsströme und einen Mikroextruder zum Zuführen einer elektrisch leitfähigen Kautschukmischung über eine Öffnung einer die Kautschukmischungsströme teilenden Düse aufweist. Die Kautschukmischungsströme werden dabei in der Düse vereinigt.

Die DE 10 2006 036 508 A1 betrifft ein Verfrühen zum Einbringen von elektrisch leitfähigen Gummipassagen in einen durch einen Spulvorgang hergestellten Laufstreifen. Das elektrisch leitfähige Material wird nach dem Spulvorgang in den fertig aufgebauten Laufstreifen durch punktuelle Injektion eingebracht.

Aus der EP 2 027 991 B1 ist ferner ein Verfahren zur Herstellung eines Laufstreifens aus einer elektrisch nicht leitfähigen Kautschukmischung bekannt, bei dem ein Teil der Laufstreifencap als Profil extrudiert wird, an der inneren Stirnfläche des Profils eine elektrisch leitfähige Kautschukmischung in Streifenform angebracht wird und anschließend die Laufstreifencap durch Zusammenfügen mit einem zweiten, als Profil extrudierten Teil komplettiert wird.

Der Erfindung liegt die Aufgabe zugrunde, eine Vorrichtung der eingangs genannten Art zur Verfügung zu stellen, mit welcher zumindest eine über den Umfang des Laufstreifens verlaufende elektrisch leitfähige Passage hergestellt werden kann, die auch bei einem mehrschichten Aufbau des Laufstreifens im fertigen Reifen eine elektrisch leitfähige Verbindung von der Außenfläche des Laufstreifens zum leitfähigen Unterbau besonders zuverlässig sicherstellt.

Die gestellte Aufgabe wird erfindungsgemäß dadurch gelöst, dass die den/die Kautschukmischungsstrom bzw. -ströme in Querrichtung teilende oder auseinanderführende Einrichtung im Querschnitt eine längliche ovale Form aufweist.

Die Einrichtung ist in einer geometrischen Form ausgeführt, die das vorgesehene Teilen oder Auseinanderführen der Kautschukmischung(en) unterstützt und ein optimales Benetzen der Trennflächen mit der zumindest ein elektrisch leitendes Material enthaltenden Dispersion sicherstellt.

Die Erfindung gestattet es daher, mit sehr einfachen Maßnahmen zumindest eine elektrisch leitfähige, im fertigen Reifen umlaufende Passage im Laufstreifen herzustellen. Darüber hinaus gestattet es die Erfindung, eine Dispersion als elektrisch leitfähiges Medium zu verwenden, die einfach zu handhaben ist und eine dünne, elektrisch leitende Schicht im Laufstreifen bildet, die diesen umläuft und dabei den Laufstreifen in radialer Richtung durchquert. Die Einrichtung, welche diese Dispersion auf die Trennflächen aufbringt, kann lokal an nahezu beliebiger Stelle in der Vorschablone positioniert werden. Die an der Extrusionsvorrichtung erforderlichen Umbauarbeiten sind gering und kostengünstig.

Bei einer bevorzugten Ausführungsform der Erfindung erfolgt die Teilung bzw. das Auseinanderführen der in die Vorschablone transportierten Kautschukmischung(en) mittels einer Einrichtung, die eine Spritzdüse aufweist oder überhaupt als Spritzdüse ausgeführt ist.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Querschnitt durch einen Rohlaufstreifen eines Fahrzeugluftreifens,
Fig. 2 eine Schnittansicht im vorderen Bereich einer Extrusionsvorrichtung zur Herstellung eines Rohlaufstreifens,
Fig. 3 eine Vorderansicht einer Ausführungsform einer Vorschablone,
Fig. 4 eine die Funktionsweise der Erfindung verdeutlichende Ansicht eines Details der Vorschablone.

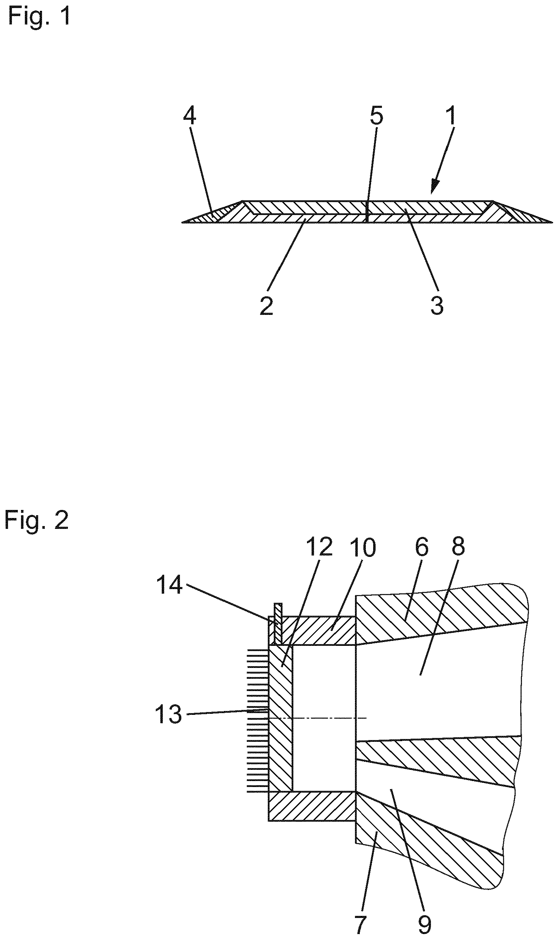

Fig. 1 zeigt beispielhaft einen in radialer Richtung zweischichten Rohlaufstreifen 1 im Querschnitt mit einer Laufstreifenbase 2, einer Laufstreifencap 3 und zwei schulterseitig angeordneten Wingprofilen 4. Die Laufstreifenbase 2, die Laufstreifencap 3 und die Wingprofile 4 sind aus unterschiedlichen Kautschukmischungen hergestellt, die Laufstreifencap 3 aus einer elektrisch nicht oder kaum leitfähigen Mischungszusammensetzung, die Laufstreifenbase 2 entweder ebenfalls aus einer elektrisch nicht leitfähigen Mischungszusammensetzung oder alternativ aus einer elektrisch leitfähigen Mischungszusammensetzung. Elektrisch nicht leitfähige Mischungszusammensetzungen enthalten als Füllstoff üblicherweise Silika (Kieselsäure), welche den sonst üblichen Ruß zumindest zum Teil ersetzt. Um bei einer Verwendung der fertig aufgebauten und vulkanisierten Reifen am Fahrzeug unangenehme Entladungsvorgänge durch elektrostatische Aufladungen des Fahrzeuges zu vermeiden, werden in solchen Laufstreifen elektrisch leitfähige Passagen eingebaut, die elektrisch leitende Verbindungen zwischen der Außenfläche des Laufstreifens und dem elektrisch leitfähigen Unterbau im Reifen, beispielsweise einer unmittelbar an die Laufstreifenbase anschließenden Gürtelbandage oder einer Gürtellage, herstellen. In Fig. 1 ist eine elektrisch leitfähige Passage 5 als in radialer Richtung die Laufstreifencap 3 und die Laufstreifenbase 2 durchsetzender schmaler Streifen eingezeichnet, welcher den Laufstreifen in Umfangsrichtung umläuft.

Fig. 2 zeigt einen Teilbereich eines vorderen Abschlussbereiches einer Extrusionsvorrichtung zur Herstellung eines Rohlaufstreifens. Von der an sich drei Extruder aufweisenden Extrusionsvorrichtung sind im gezeigten Beispiel nur die vorderen Bereiche von zwei unter einem spitzen Winkel übereinander gesetzten Extrudern 6, 7 gezeigt, deren Strömungskanäle 8, 9 in an sich bekannter Weise mit abnehmender Querschnittshöhe und sich vergrößernder Breite in Auspressrichtung in eine Vorschablone 10 verlaufen. Im oberen Strömungskanal 8 wird die Kautschukmischung für die Laufstreifencap 3, im unteren Strömungskanal 9 jene für die Laufstreifenbase 2 transportiert. Nach dem Passieren der Vorschablone 10 gehen die Strömungskanäle endgültig in einem nicht gezeigten formgebenden Mundstück (Extrusionsendschablone) ineinander über. Der dritte Extruder, welcher ebenfalls an die Vorschablone 10 angesetzt ist und die Kautschukmischung für die Wingprofile 4 zuführt, ist nicht dargestellt.

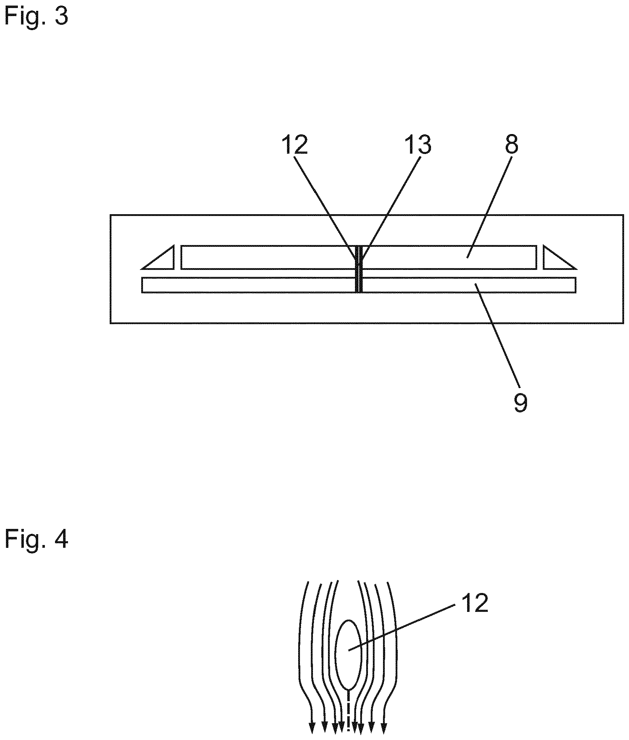

In der Vorschablone 10 ist unmittelbar vor dem Mundstück eine Schlitzdüse 12 senkrecht zur Strömungsrichtung derart positioniert bzw. eingebaut, dass sie die in der Vorschablone 10 in Vorderansicht eine ausgeprägte Quererstreckung aufweisenden Strömungskanäle 8, 9 in Querrichtung teilt. Bei der gezeigten Ausführungsform ist die Schlitzdüse 12 etwa mittig in die Vorschablone 10 eingebaut und teilt daher die Strömungskanäle 8, 9 jeweils in Hälften. Der Schlitz 13 der Schlitzdüse 12 ist dem Mundstück zugewandt. Die Schlitzdüse 12 kann über eine als Rohr oder Schlauch ausgeführte Zuleitung 14 von außen mit einer elektrisch leitendes Material beinhaltenden Dispersion beschickt werden. Wie Fig. 4 zeigt, weist die Schlitzdüse 12 einen in Strömungsrichtung länglichen, insbesondere ovalen Querschnitt auf.

Im Betrieb der Vorrichtung tritt die im Extruder 6 hergestellte Kautschukmischung für die Laufstreifencap 3 im Strömungskanal 8 in die Vorschablone 10 ein, die Laufstreifenmischung für die Laufstreifenbase 2, die im Extruder 7 hergestellt wird, tritt im Strömungskanal 9 in die Vorschablone 10 ein. Die Schlitzdüse 12 teilt, wie es Fig. 4 durch Pfeile andeutet, die fließfähigen plastischen Kautschukmischungen in zwei Teile, die an der Schlitzdüse 12 vorbei fließen. Vor dem Zusammenfließen der Kautschukmischungsteile, nach dem Passieren der Schlitzdüse 12 und beim Eintreten in das Mundstück wird die erwähnte Dispersion durch den Schlitz 13 der Schlitzdüse 12 auf die Trennflächen der geteilten Kautschukmischungen aufgebracht, insbesondere gesprüht, wie es in Fig. 2 durch die kurzen waagrechten Striche und in Fig. 4 durch die gestrichelte Linie angedeutet ist, sodass nach dem Vereinigen der Kautschukmischungen in diesen eine dünne, elektrisch leitende Schicht, die spätere elektrisch leitende Passage 5, eingeschlossen ist. Da die Kautschukmischungen für die Laufstreifenbase 2 und die Laufstreifencap 3 komplett geteilt werden, ist sichergestellt, dass die aus der Schlitzdüse 12 austretende Dispersion örtlich sowohl die Außenfläche der im Mundstück gebildeten Laufstreifencap 3 als auch örtlich die Innenfläche der dort geformten Laufstreifenbase 2 benetzt.

Die zumindest ein elektrisch leitendes Material enthaltende Dispersion kann eine Dispersion mit einem flüssigen Dispersionsmedium sein. Die Dispersion kann elektrisch leitfähige Partikel, insbesondere Ruß, beispielsweise Ruß N 339 oder N 121, Karbonnanotubes, Karbonfasern oder sonstige elektrisch leitfähige Partikel, beispielsweise auch Nanopartikel oder Metallpartikel, enthalten. Das flüssige Dispersionsmedium kann vorteilhafterweise eine Flüssigkeit sein, die üblicherweise in Laufstreifenmischungen verwendet wird, wie beispielsweise Rapsöl, MBS-Öl, TDAE-Öl, RAE-Öl oder paraffinisches Öl, ein anderes flüssiges und mit Kautschuk chemisch verträgliches Dispersionsmedium oder flüssiger Kautschuk. Möglich ist auch die Verwendung von Gummilösungen, welche in einem Lösungsmittel dispergierte Gummipartikel und beispielsweise Ruß und übliche Vulkanisationschemikalien enthalten.

Die Schlitzdüse 12 kann im Querschnitt auch derart ausgeführt sein, dass ihr Teilbereich, welcher die Aufteilung der in die Vorschablone einfließenden Kautschukmischungen bewirkt, spitz zusammenlaufend ausgeführt ist. Es ist ferner möglich, einen separaten Bauteil zur Aufteilung der Kautschukmischungen in die Vorschablone einzubauen. Die Extrusionsvorrichtung kann ferner dafür ausgelegt sein, durch eine entsprechende Anzahl und Anordnung von Extrudern einen drei- oder vierschichtig aufgebauten Laufstreifen herzustellen.

Mit der erfindungsgemäßen Vorrichtung lassen sich Rohlaufstreifen mit beliebigem Aufbau mit elektrisch leitfähigen Passagen versehen. So kann beispielsweise der Laufstreifen lediglich einschichtig ausgeführt sein, ferner drei oder mehr Schichten aufweisen oder auch in axialer Richtung geteilte Schichten aufweisen. Nach dem Aufbau richtet sich auch die Anzahl der eingesetzten unterschiedlichen Kautschukmischungen.

### Bezugsziffernliste

- 1: Rohlaufstreifen
- 2: Laufstreifenbase
- 3: Laufstreifencap
- 4: Wingprofil
- 5: Passage
- 6: Extruder
- 7: Extruder
- 8: Strömungskanal
- 9: Strömungskanal
- 10: Vorschablone
- 12: Schlitzdüse
- 13: Schlitz
- 14: Zuleitung

## Patentansprüche

1. Vorrichtung zur Herstellung eines ein- oder mehrschichtig aus zumindest einer Kautschukmischung aufgebauten Rohlaufstreifens (1) eines Fahrzeugluftreifens mit zumindest einem Extruder (6, 7), einem Mundstück und einer diesem vorgeordneten Vorschablone (10), in welcher der zumindest eine Kautschukmischungsstrom vorgeformt wird,
wobei in der Vorschablone (10) vor dem Mundstück lokal zumindest eine Einrichtung positioniert ist, welche den bzw. die in der Vorschablone bereits vorgeformten Kautschukmischungsstrom bzw. -ströme in Querrichtung auseinander führt oder teilt und welche über eine Vorrichtung verfügt, mittels welcher vor dem Vereinigen der Kautschukmischung(en) auf die Trennflächen eine zumindest ein elektrisch leitendes Material enthaltende Dispersion aufbringbar ist,
**dadurch gekennzeichnet,**
**dass** die den/die Kautschukmischungsstrom bzw. -ströme in Querrichtung teilende oder auseinanderführende Einrichtung im Querschnitt eine länglich ovale Form aufweist.

2. Vorrichtung nach Anspruch 1, **dadurch gekennzeichnet, dass** die den/die Kautschukmischungsstrom bzw. -ströme in Querrichtung teilende oder auseinanderführende Einrichtung eine Spritzdüse (12) ist oder eine Spritzdüse (12) aufweist.

## Claims

1. Apparatus for the production of a single- or multilayer green tread (1) which is composed of at least one rubber mixture and is intended for a pneumatic tyre, with at least one extruder (6, 7), one discharge unit and, in sequence in front of this, a preformer (10) in which the at least one stream of rubber mixture is preformed,
where, locally positioned in the preformer (10) in front of the discharge unit there is at least one device which, in transverse direction, separates or divides the stream(s) of rubber mixture that has/have already been preformed in the preformer and which comprises an apparatus by means of which, before the rubber mixture(s) is/are brought together, a dispersion comprising at least one electrically conductive material can be applied to the separated surfaces,
**characterized in that** the cross section of the device that, in transverse direction, divides or separates the stream(s) of rubber mixture is of elongate oval shape.

2. Apparatus according to Claim 1, **characterized in that** the device that, in transverse direction, divides or separates the stream(s) of rubber mixture is a nozzle (12) or comprises a nozzle (12).

## Revendications

1. Dispositif de production d'une bande de rechapage monocouche ou multicouche (1) constituée d'au moins un mélange de caoutchouc pour un pneumatique de véhicule, comprenant au moins une extrudeuse (6, 7), un embout et un gabarit préliminaire (10) monté en amont de celui-ci, dans lequel l'au moins un écoulement de mélange de caoutchouc est préformé,
au moins un agencement étant positionné localement avant l'embout dans le gabarit préliminaire (10), lequel écarte ou sépare l'un de l'autre dans la direction transversale le ou les écoulements de mélange de caoutchouc déjà préformés dans le gabarit préliminaire, et lequel dispose d'un dispositif au moyen duquel, avant la convergence du ou des mélanges de caoutchouc, une dispersion contenant au moins un matériau électriquement conducteur peut être appliquée sur les surfaces de séparation,
**caractérisé en ce que**
l'agencement séparant ou écartant l'un de l'autre le ou les écoulements de mélange de caoutchouc dans la direction transversale présente en section transversale une forme ovale allongée.

2. Dispositif selon la revendication 1, **caractérisé en ce que** l'agencement séparant ou écartant l'un de l'autre le ou les écoulements de mélange de caoutchouc dans la direction transversale est une buse de pulvérisation (12) ou présente une buse de pulvérisation (12).
